# EUROPEAN PATENT APPLICATION

(11) **EP 0 878 303 A2**
(43) Date of publication of application: **18.11.1998**
(21) Application number: 98303669.0
(22) Date of filing: 11.05.1998
(51) Int. Cl.: B41F 33/00

(54) **Distributed imaging and control architecture for digital printing presses and platesetters**

(30) Priority: 15.05.1997 US 856900
(71) Applicant: Presstek, Inc., Hudson, New Hampshire 03501 (US)
(72) Inventor: Benson, Roth C., Candia, NH 03034 (US); Cabana, Glenn E., Derry, NH 03038 (US); Frank, Steven J., Framingham, MA 01702 (US)
(74) Representative: Shaya, Darrin Maurice

(57) **Abstract**

A distributed architecture for control of printing presses includes a job-control computer facilitating at least selection of printing jobs, and a separate image-control computer or computers managing operation of the various imaging devices. The job-control and image-control computers interact over a computer network, which can range from a single LAN to the Internet; typically, the image-control computer is physically associated with the press, while the job-control computer may be proximate or remote. The job-control computer may contain on-board storage for retaining multiple printing jobs, or the system may instead include a server computer, connected to and accessible over the network, that serves as a central storage facility. The job-control computer may allow the operator to perform various functions and adjustments relating to final printing quality, and which may affect the job data, printing-press operation, or both. The job-control computer may also afford the operator control over ink regulation, typically via a separate dedicated computer. The architecture of the invention is capable of supporting a plurality of printing presses under the common control of one or more job-control computers. In this way, a single job-control computer may interact with and direct the operation of remotely located printing presses, each of which is served by a separate image-control computer.

## Description

The present invention relates to digital printing apparatus and methods, and more particularly to a computer architecture for exercising common, task-based control over one or more physically separate lithographic printing systems.

In offset lithography, a printable image is present on a printing member as a pattern of ink-accepting (oleophilic) and ink-repellent (oleophobic) surface areas. Once applied to these areas, ink can be efficiently transferred to a recording medium in the imagewise pattern with substantial fidelity. Dry printing systems utilize printing members whose ink-repellent portions are sufficiently phobic to ink as to permit its direct application. Ink applied uniformly to the printing member is transferred to the recording medium only in the imagewise pattern. Typically, the printing member first makes contact with a compliant intermediate surface called a blanket cylinder which, in turn, applies the image to the paper or other recording medium. In typical sheet-fed press systems, the recording medium is clamped to an impression cylinder via grippers, which brings it into contact with the blanket cylinder.

In a wet lithographic system, the non-image areas are hydrophilic, and the necessary ink-repellency is provided by an initial application of a dampening (or "fountain") solution to the plate prior to inking. The ink-abhesive fountain solution prevents ink from adhering to the non-image areas, but does not affect the oleophilic character of the image areas.

If a press is to print in more than one color, a separate printing member corresponding to each color is required. The original image is transformed into a series of imagewise patterns, or "separations," that each reflect the contribution of the corresponding printable color. The positions of the printing members are coordinated so that the color components printed by the different members will be in register on the printed copies. Each printing member ordinarily is mounted on (or integral with) a "plate" cylinder, and the set of cylinders associated with a particular color on a press is usually referred to as a printing station.

Modern lithographic printing presses are controlled by computer, and may contain provision for on-press imaging of lithographic printing plates. In such systems, the press computer accepts printing jobs in digital form (typically from a prepress system, where layout and image processing are performed), and operates the press to print the job. That is, the press computer causes the various printing plates to be imaged in accordance with digital files containing color separations; data representing each separation is fed to an imaging device associated with the corresponding printing plate, and the imaging device, in response, impresses a lithographic printing pattern on the plate in accordance with the data. The press computer may be configured to permit the operator to make various adjustments; for example, the size of the image may be altered as it is applied to the plate in order to ensure registration among plate images during printing, and ink flow at each station may be regulated to accommodate different ink densities or to produce a desired color correction on the final printed copy.

This arrangement, while well-suited to a simple single-press environment, exhibits certain limitations in connection with larger presses or multiple-press configurations; for example, the various presses may be physically remote from one another, or from the source of the printing job. For example, a newspaper publisher may wish to print a single edition simultaneously in several remote locations; because editorial changes necessitating alteration of prepress files may be made up until the actual press run, it is inconvenient to maintain separate prepress or image files (all of which must be individually altered to accommodate editorial change) at each printing press. If multiple editions are envisioned, the choice of where to store the common material and how to effect separate compositions and plate imaging for the various editions may be dictated by the hardware configuration rather than overall publishing efficiency; for example, if press adjustments must be made at each printing location, it may be difficult-to avoid location-specific storage and manipulation of all image files, even if centralized control would afford greater editorial flexibility.

Indeed, even at the single-press level, traditional one-press, one-computer arrangements can prove inefficient. The resources needed for job selection and press adjustment are quite distinct from the control operations that govern the various imaging systems; the latter involve continuous, high-speed data transfer, and even true multitasking systems cannot readily combine imaging with service functions.

Accordingly, in a first aspect, the invention overcomes excessive demands on computational resources by segmenting tasks among various hardware devices. In an exemplary embodiment, a job-control computer provides an operator interface facilitating at least selection of printing jobs, and a separate image-control computer manages operation of the various imaging devices. The job-control and image-control computers interact over a computer network; typically, the image-control computer is physically associated with the press or standalone platesetter, while the job-control computer may be proximate or remote. The job-control computer may contain on-board storage for retaining multiple printing jobs, but preferably these are stored on one or more separate server computers connected to and accessible over the network. Printing jobs, which ordinarily have been composed and "raster-image processed" on a prepress system (that may, in fact, be the server computer) into image-ready bitmaps, are selected by the operator, and the job-control computer sends control data and commands to the image-control computer to enable this device to access the bitmap data (wherever this is actually stored) for plate imaging (and, on a press, subsequent printing).

Preferably, the job-control computer allows the operator to perform various functions and adjustments relating to final printing quality, and which may affect the job data, printing-press operation, or both. For example, the operator may be able to select the size of the image (which, as discussed below, determines how the bitmap is actually rendered on a plate), alter X/Y registration, select an imaging density, direct particular bitmap files (e.g., the color separations of a single printing job) to specified imaging stations, preview jobs, delete unwanted jobs, monitor the progress of press operation, and issue asynchronous abort commands to stop the press. In some embodiments, the job-control computer allows the operator to directly control press operation, including the onset of plate imaging, plate cleaning, power settings, etc.; in other embodiments, these press-specific functions are restricted to the image-control computer, and in still other embodiments, control over these functions is accorded to both computers.

The job-control computer may also afford the operator control over ink regulation. Because ink regulation is independently determined for each imaging station, however, a separate computer -- also connected to the computer network (and, in on-press implementations, usually associated directly with the press) -- is preferably dedicated to this function.

In a second aspect, the invention provides an architecture capable of supporting a plurality of printing presses and/or platesetters under the common control of one or more job-control computers. In this way, a single job-control computer may interact with and direct the operation of remotely located plate imagers (on one or more printing presses and/or platesetters), each of which is served by a separate image-control computer. Ink regulation may be governed by a single computer communicating with all controlled printing presses, or by multiple computers each associated with a different press. Once again, the various components of the system communicate over a computer network.

In a third embodiment, the components are configured to communicate over the Internet or a wide-area network ("WAN") or local-area network ("LAN"), which may, for example, support the TCP/IP communication protocol as a so-called "intranet." Each component is outfitted with an appropriate network interface, such as an Internet "browser," which can, for example, manage communications over the World Wide Web portion of the Internet (hereafter the "Web") or over an intranet. If all components of the invention are connected as "nodes" on the Internet, the operator of the job-control computer can select any of the various printing presses by causing the job-control computer to establish a connection to the associated image-control computer; if the computers are Web-compatible, establishing this connection is as simple as clicking on a "hypertext link." Furthermore, the image-control computers can be programmed with self-executing programs called "applets" which, when automatically downloaded to the job-control computer as a consequence of the Web connection, can provide status information and/or a direct interface for controlling press operation.

Although the architecture of the invention facilitates communication among components over essentially limitless distances, it should be stressed that the invention may also be practiced on a single press, with all components situated in the same location. Indeed, the various computational resources of the invention may even be implemented within a common press housing as discrete microprocessor components, rather than as separate computers.

The foregoing discussion will be understood more readily from the following detailed description of the invention, when taken in conjunction with the accompanying drawings, in which:
FIG. 1 is a side elevational and schematic view of a conventional offset color press;
FIG. 2 schematically depicts connections among the components of a single-press system embodying the invention;
FIG. 3 schematically illustrates the components of a representative job-control computer;
FIG. 4 is a diagrammatic view of a test print used to align and color-calibrate the press;
FIG. 5 schematically illustrates various implementation options for ink control;
FIG. 6 schematically depicts a multiple-press environment, the operation of which may be governed by one or more control computers.

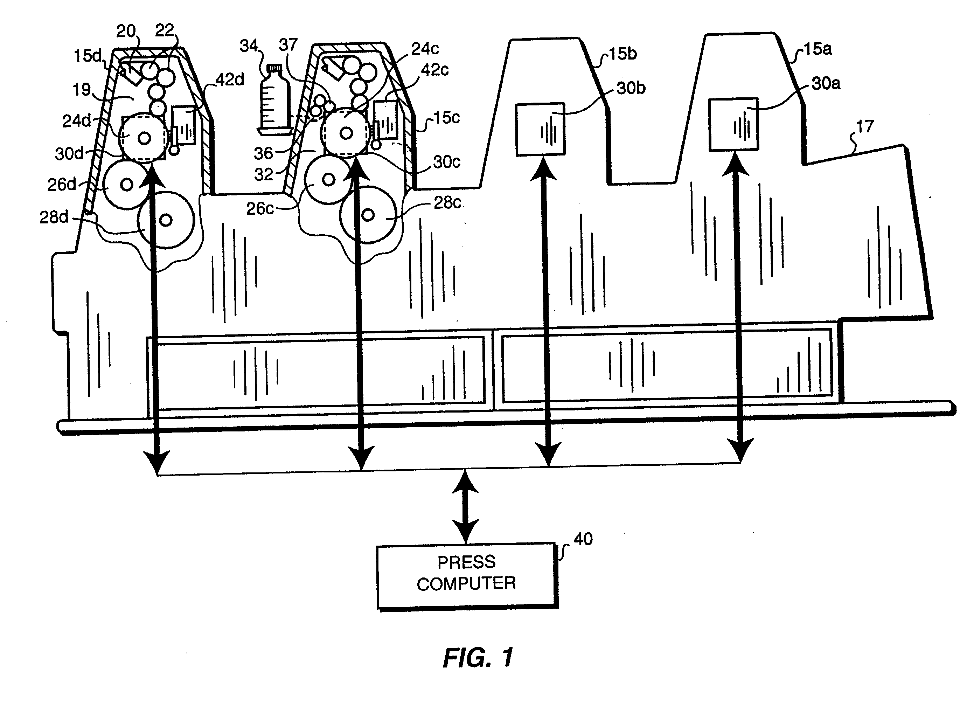

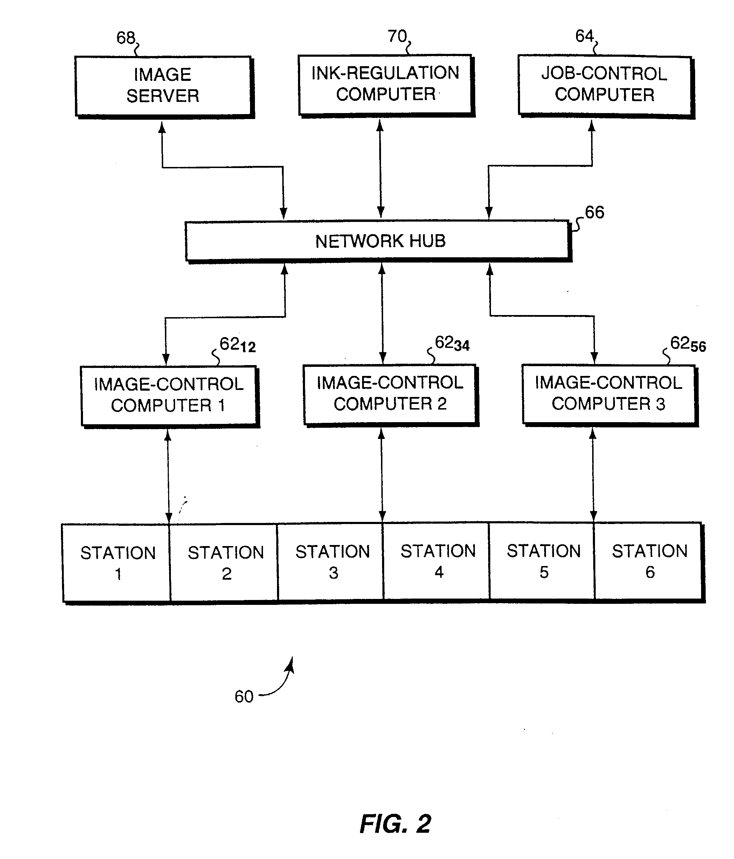

An exemplary press system to which the present invention may be applied is shown in FIGS. 1 and 2. It should be understood, however, that the invention may also be applied to platesetters, or to mixed systems involving one or more presses and one or more platesetters.

The illustrated press, which utilizes an in-line configuration, comprises a series of four print stations or towers 15a, 15b, 15c and 15d, each of which contains the necessary equipment to apply ink or lacquer to a recording material. (Although four print stations are illustrated, it should be understood that conventional presses can contain as few as one or as many as 10 or more such stations, depending on the nature of the printing to be performed.)

Individual sheets of recording material are-fed to the print stations from a tray 17 at the right side of the press as viewed in FIG. 1. A conventional handling mechanism (not shown) draws the topmost sheet from tray 54 and carries it to the first print station 15a, where it is wrapped around an impression cylinder and inked. Thereafter, the sheet is stripped from this impression cylinder and carried to the second print station 15b where a similar operation is performed, and so on. The handling mechanism maintains registration and alignment of the material as it is transported across the press, and may contain a "perfection" assembly that turns the sheet upside down between print stations for two-sided printing.

The cutaway view of FIG. 1 illustrate the components of two representative print stations 15c, 15d. Station 15d, which is configured for dry printing, includes an ink fountain assembly 19 that comprises an ink tray 20, which transfers ink via a series of rollers 22, and means for automatically controlling ink flow so that the amount and distribution of ink can be regulated electronically. The rollers 22 transfer ink to the surface of a plate cylinder 24d, which makes surface contact with a blanket cylinder 26d of the same diameter, and that cylinder, in turn, is in surface contact with a recording medium pinned to an impression cylinder 28d. The print station also includes a controller, shown in phantom at reference numeral 30d, which monitors the angular position of plate cylinder 24d. A suitable controller design is described in U.S. Patent No. 5,174,205, the entire disclosure of which is hereby incorporated by reference; however, for purposes hereof, the controller can be any suitable angular positioning and monitoring system.

The press can also be configured to print webs of recording material by addition of suitable feeding equipment on the intake side of the press (in lieu of tray 17), and complementary uptake equipment on the output side.

Print station 15c is configured for wet printing; in fact, it is possible to employ both wet and dry printing stations in the same press, and both types are shown in FIG. 1 for illustrative purposes. Print station 15c contains all of the features of print station 15d, as well as a dampening system 32, which comprises a water source 34 that feeds water to a water tray 36. A series of dampening rollers 37 transfer water from water tray 36 to plate cylinder 24c. For this station, controller 30c regulates dispensation both of water and ink.

The printing stations are equipped with on-press imaging systems, indicated by reference numerals 42c and 42d. These systems preferably incorporate laser-based imagers, as described, for example, in U.S. Patent No. 5,385,092 (the entire disclosure of which is hereby incorporated by reference). In accordance with this system, a writing array comprising a bank of lasers is controlled to image a blank plate in accordance with data representing the material to be printed. The blank plates are mounted on plate cylinders 24, and the writing arrays positioned opposite the surfaces of the plates. As the plate cylinders rotate, an image-control computer 40 actuates the lasers when these reach appropriate points opposite the plate surface. Computer 40 receives angular-position data from controllers 30, which indicate the positions of cylinders 24 with respect to the writing array. Based on this information and stored image data defining points on the plates where image spots are to be written, computer 40 correlates the instantaneous relative positions of the writing array and the plate with the image data to actuate the appropriate laser drivers at the appropriate times as the plates are scanned.

Image-control computer 40 comprises a central-processing unit, storage, and appropriate programming to operate the press. As described below, computer 40 includes an interface for connecting to a computer network.

In a conventional press, the operator would enter, on computer 40, instructions for imaging the printing plates on-press, registration information, and/or instructions relating to press control such as ink-flow adjustment, number of copies to be printed, etc. -(see, e.g., U.S. Patent No. 5,163,368). In accordance with the present invention, however, these functions are distributed. In a simple network configuration, illustrated in FIG. 2, a printing press 60 is illustrated as a series of print stations 1-6 (corresponding to stations 15 in FIG. 1, plus two additional stations). A series of three image-control computers 62₁₂, 62₃₄, 62₅₆ each controls a pair of these imaging stations. In particular, computers 62 provide the operational and imaging functionality to effect plate imaging and press runs. Image-control computers 62 may receive commands from a job-control computer 64 (see below), provide status information-, interface to press-control electronics, control press speed, monitor press operation, store and transfer data characterizing the press or platesetter, and as discussed below, perform dot-counting operations for ink regulation. The use of three separate computers, each dedicated to two imaging stations, facilitates maximum imaging speed of simultaneously operative writing arrays using inexpensive, readily available processors. For example, computers 62 may be personal computers based on, e.g., the PENTIUM microprocessor marketed by Intel Corp.

The job-control computer 64 allows the operator to select a job for imaging and printing on press 60. A job consists of digitally stored files each representing a color separation or defining an application region for lacquer or the like. Preferably, job-control computer 64 is configured to allow the operator to call up the data and "soft-preview" the image on an associated display before sending the job to image-control computers 62. Furthermore, job-control computer 64 can include image-processing functions, such as raster-image processing that converts prepress image data and text data (the latter typically encoded in page-description language) into the output-ready bitmap that is sent to the image-control computers 62 as picture signals. Indeed, it is possible to lodge a full suite of prepress capabilities within job-control computer 64, ranging from halftone screening to full composition and editing functions that allow an operator to enter information directly and manipulate it. Because of the manner in which responsibilities are ordinarily divided in the printing and publishing industries, however, such extended prepress capabilities would probably serve little purpose in most applications. Most typically, the image-processing capabilities of job-control computer 64 are confined to job preview and soft proofing.

Upon operator command, job-control computer 64 transmits command and control information facilitating access to local or remote image data by image-control computers 62. Image-control computers 62 receive the bitmap image data and actuate the associated imaging-system writing arrays to apply corresponding images to the plates on the respective plate cylinders. Job-control computer 64 and image-control computers 62 communicate over a computer network platform 66, which may be, for example, a conventional, multiport network hub. In order to ensure proper routing of messages among networked computers, the messages are typically broken up into data packets, each of which receives a destination address according to a consistent protocol, and which are reassembled upon receipt by the target computer. The communication protocol is not critical; any suitable message format and structure may be used advantageously. Similarly, the network topology may be composed of any high-speed data interconnect facility. Supported message types ordinarily include commands (e.g., start imaging, abort imaging, start press, stop press, provide status), response messages, communication-related messages, etc.

Job-control computer 64 may contain a large permanent storage facility (e.g., a RAID array or optical drive) for image files. Preferably, however, jobs may be contained in one or more separate image servers 68, where images are composed and assembled. Image server 68 provides a full complement of prepress capabilities, as well as substantial storage space, and connects to network hub 66 so as to be accessible to job-control computer 64 and image-control computers 62. Data concerning ink regulation may also be contained on a separate computer 70, which is once again connected to network hub 66 for access by job-control computer 64.

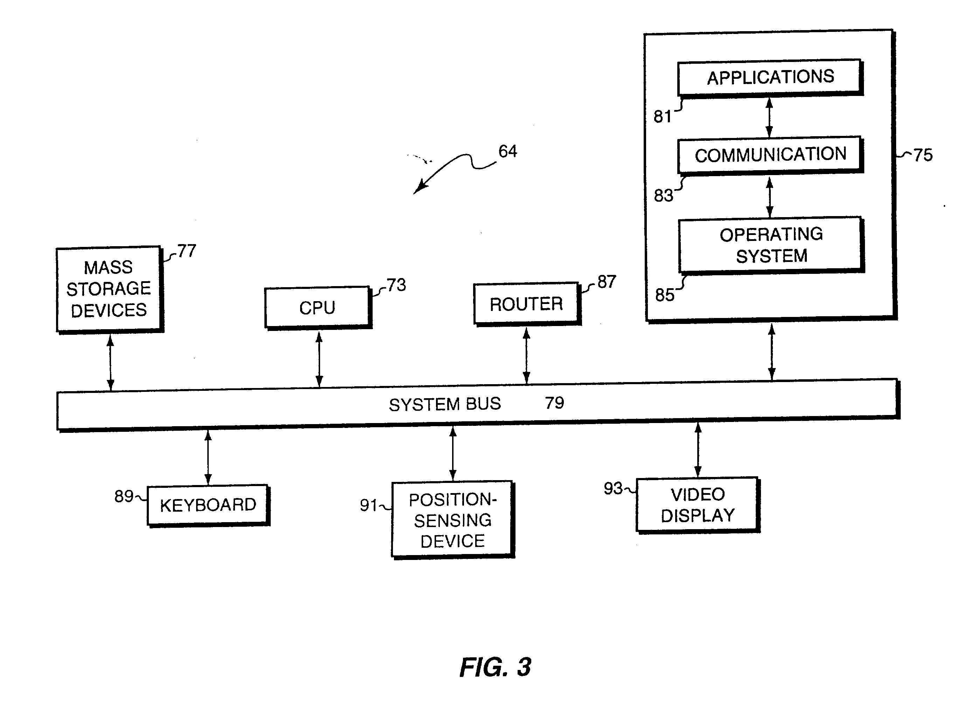

The elements of a suitable job-control computer 64 are illustrated in greater detail in FIG. 3. The depicted system includes a central-processing unit 73, which performs operations on and interacts with a main system memory 75 and components thereof. System memory 75 typically includes volatile or random-access memory (RAM) for temporary storage of information, buffers, and portions of the computer's basic operating system and graphical user interface. The system also includes at least one mass storage device 77, the size of which, once again, depends on the extent to which job-control computer 64 is used for image storage. All components of the system communicate over a bidirectional system bus 79.

System memory 75 contains, during operation, one or more applications 81 appropriate to the role of computer 64, a communication module 83 capable of transferring data among machines, and an operating system and graphical user interface 85. Communication module 83 drives a network card that provides a data-transfer interface to network hub 61, or, in more elaborate applications (described below) involving WANs or the Internet, a router 87.

The operator interacts with the system using a keyboard 89 and a position-sensing device (e.g., a mouse) 91. The output of either device can be employed to designate information or select particular areas of a video screen display 93, over which the operator observes the state of press 60. Interactions between the operator and computer 64 are managed through a suitable graphical user interface appearing on display 93.

After the plates have been imaged, press 60 can be operated in its print mode to print proof copies of the original document, the number being determined by the operator's instructions entered into job-control computer 64 via keyboard 89, and transferred to image-control computers 62. If the colors printed on the copies are acceptable, the operator can instruct press 60, again via job-control computer 64, to print the required number of final copies. If changes are required, new printing plates can be made using appropriately corrected image data.

Preferably, the image-processing capabilities of job-control computer 64 include correction of various types of cyclical mechanical error, such as axial misalignment and skew, and image enlargement or shrinking.

Computers 62, which are each coupled to the pair of associated controllers 30, receive angular-position information and, by appropriate control signals, ensure consistent rotation and angular coordination among the plate cylinders. To establish consistent starting positions, as well as correct for registrations errors caused by factors other than misalignment, each of computers 62 has access to dot-position lookup tables for the stations under its control. The lookup tables store the x and y coordinates of initial dot positions of the picture to be imaged. By performing a so-called end-to-end test using plates imaged with simple test patterns (e.g. vertical and horizontal lines), copies are printed. If certain color lines deviate from the theoretical true position, the differences are measured and suitable x and y offsets entered into the lookup tables corresponding to the offending color. While the lookup tables help direct the operation of image-control computers 62 (and, ultimately, press 60), they typically originate with job-control computer 64 as discussed below.

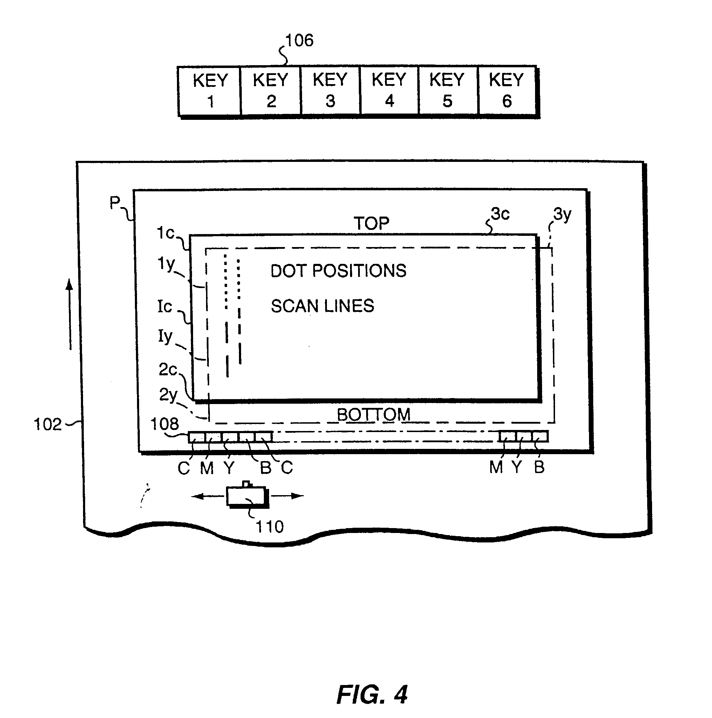

FIG. 4 illustrates a two-color print P printed by press station 30c, printing a cyan image I_{c}, for example, and by station 30d, printing a yellow image I_{y}, for example. Because plate cylinders 24c and 24d are out of phase with one another, the yellow image is displaced axially (x direction) and circumferentially (y direction) (i.e., it is out of register) with respect to the cyan image I_{c} used as the position reference. Accordingly, it is necessary to bring the respective image-start positions into line with one another.

The yellow image is also skewed and is somewhat longer because, for example, plate cylinder 24d is slightly longer in diameter than plate cylinder 24c. Assuming that the images are scanned circumferentially as in FIG. 4, if plate cylinder 24d is even slightly larger in diameter then plate cylinder 24c, the image dots formed on the plate for the color yellow will be spaced further apart along a scan line then the corresponding dots on the cyan plate imaged at station 15c, thus making the yellow image longer than the cyan image.

Using corresponding targets on the different color images (e.g. image corners or crosshairs), the yellow image formed at station 30d can be brought into register with the reference cyan image formed at station 30c by introducing appropriate x and y offsets. Thus in FIG. 4, the distance between the vertical legs of the upper lefthand corners 1c and 1y of images I_{y} and I_{c} (or equivalent crosshairs) can be measured optically and an appropriate offset in the minus-x direction entered into image-control computers 62, so that controller 30d controls the writing array of imaging system 42d to start writing earlier, i.e., closer to its home position, in its travel along the plate cylinder 24d. Prints made from the corrected plate (i.e., prints similar to those shown in FIG. 4) are observed and the procedure repeated until the vertical legs of corners 1_{y} and 1_{c} coincide.

A similar procedure is used to achieve alignment in the y direction. In this case, the horizontal legs of corners ly and lc of the printed images I_{y} and I_{c} are compared and any needed offset (in this case, a plus-y offset) is entered into image-control computers 62. Controller 30d then causes the writing head in imaging system 42d to start writing the yellow image earlier in the rotation of the plate cylinder at that station. As with the x-direction offset, corrected plates are imaged to make corrected prints P until the horizontal legs or corners ly and 1c of the images I_{y} and I_{c} are in superposition.

Timing adjustments can also be used to grow or shrink the image. Because the laser beams focus onto the surface of a rotating printing plate, resulting in relative movement along the y direction, the y-direction distance between successive plate locations can be contracted by increasing the timing frequency -- that is, by subtracting one or more timing pulses from the counts that govern the firings of the associated writing array along each circumferential scan line. To expanded the image, timing pulses are added. If it is necessary to add or delete more than one pulse, such additions or deletions are distributed uniformly along the scan line, and therefore generally occur only occasionally.

Skew errors due, for example, to cylinder taper may be corrected in more or less the same way by comparing the horizontal legs of the upper righthand corners 3y, 3c of images I_{y} and I_{c} and starting the scan lines progressively sooner or later relative to the phase angle of the plate cylinder. Thus, in the FIG. 4 example, the successive scan lines would be started progressively sooner to correct the skew between image I_{y} and I_{c}.

The dot-position corrections or offsets are entered by the operator into job-control computer 64, and are communicated to the respective image-control computers 62. In addition, these corrections, which form the "pedigree" of the press and its imaging units, may be stored in a separate network-accessible site so as to be available to image-control computers 62 as needed. In this way, malfunctioning image-control computers can simply be replaced and the identifying data entered via the network (without repeating the entire adjustment and calibration procedure described above).

Job-control computer 64 preferably also allows the operator to designate the type of printing (wet or dry), perform press diagnostics, and may also, as described below, allow some control over the regulation of ink flow at each print station. Generally, a printing press will contain a series of ink-adjustment regulators (e.g., screws or keys) along each ink-fountain doctor blade, which are in accordance with the amount of ink required across the image; this is determined based on a count of the number of dots of each color to be printed in the band controlled by each adjusting screw or key. The operator may wish to modify this amount depending on the ink or paper used.

Because this information is usually contained in a master database that is consistent across presses (and which may be routinely updated by commercial suppliers), it is frequently advisable to dedicate a separate computer 70 to maintenance of this data and computation of the appropriate adjustments (in accordance, for example, with U.S. Patent No. 4,058,058, the entire disclosure of which is hereby incorporated by reference). Computer 70 may furnish ink-control signals to ink fountain assembly 19.

To evaluate the need for departure from standard ink settings, the printed copies may include color bars printed in margins outside the desired image areas, which margins are trimmed away after the prints are made. Such a color bar is illustrated at 108 in the bottom margin of the print 102 in FIG. 4. The color bar is normally composed of a string of color blocks, e.g., cyan (c), yellow (y), magenta (m) and black (b), showing the colors printed by each print station across the entire width of the press. The bar may also include blocks with geometric patterns indicative of color grade, resolution, etc.

As in the '058 patent, press 60 may have a number of electrically controlled ink-regulating screws or keys distributed across the press to regulate the amount of ink that the ink fountain at each print station applies to the plate cylinder at that station. FIG. 4 shows a set of six such keys juxtaposed to print 102 at print station 15c (see FIG. 1) for regulating cyan ink. In actual practice, a typical press would have more keys at each station, e.g., a press eighteen inches wide may have sixteen ink keys at each station 15a to 15d. image-control computers 62 determines for each print station which scan lines of the plate are associated with each ink key. If the print is narrow, some keys may be unused.

Image-control computers 62 determine the number of image dots associated with each key and calculate the percent of coverage for that key, defined as the total dot count per ink key divided by the maximum dot count per key; the latter quantity represents the total number of dots that could be inked by a given ink key if all dots in all the scan lines assigned to the ink key were to be printed. Preferably this is done "on the fly" as imagers 42 actually apply image dots to the plates.

Based on this information, provided over network hub 66, ink-control computer 70 next converts this percentage to a key setting and appropriately controls the key servomotor to achieve that setting; the key settings are communicated back to image-control computers 62 over network hub 66, or directly to the press. If an examination of the images I or color bars 108 printed on the copies indicates that a color correction is warranted at any ink key location, the operator may make this correction via job-control computer 64. A color densitometer 110 may aid in the analysis (or may be connected to job-control computer 64 (or image-control computers 62) for automated adjustment).

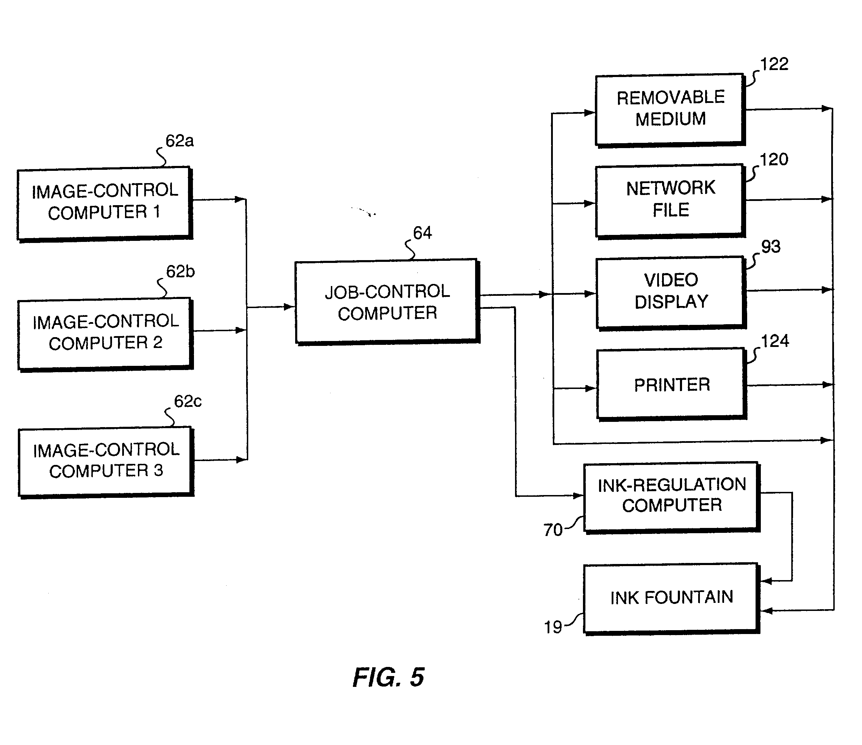

The use of an ink-regulation computer 70 is not necessary to the invention. For example, job-control computer 64 can be programmed to transform a dot count into ink settings in the manner of conventional ink-regulation computers (considering, for example, the type of ink, paper, etc.) In this case, the ink-setting data may be sent directly to ink fountains 19, or may instead be made available to the press or used to serve intermediate needs. This is illustrated in FIG. 5. A representative series of image-control computers 62a, 62b, 62c provide dot counts to job-control computer 64, which either sends these to ink-regulating computer 70 in the manner described above, or instead transforms the counts into press-ready ink-control settings. These settings may be transmitted directly to ink fountain 19, or may instead be made available to the ink controls as a network file 120 or as a machine-readable file on a removable medium 122, such as a floppy disk or tape. The settings may also be used to generate a soft proof on video display 93, or a hard proof on a printer 124, before being passed to ink fountain 19.

The benefits achieved by distribution of function among different machines are especially apparent when the machines themselves are physically dispersed. For example, computers 62, 64, 68 and 70 may communicate over a WAN, with a single job-control computer 64 directing the operation of multiple presses (each controlled by a series of image-control computers 62) in different locations, utilizing image data from various remotely located image servers 68.

Most generally, the various computers can be configured to communicate over the Internet, the worldwide "network of networks" that links millions of computers through tens of thousands of separate (but intercommunicating) networks. To effect such communication, the various computers of the invention are configured to implement the Internet Protocol, or IP, which dictates message-routing information; and the Transmission Control Protocol, or TCP, according to which messages are actually broken up into IP packets for transmission for subsequent collection and reassembly. TCP/IP connections are commonly employed to move data across telephone lines, enabling communication among the various computers via dial-up modem.

Web-accessible information is identified by a uniform resource locator or "URL," which specifies the location of the file in terms of a specific computer and a location on that computer. Any Internet "node" -- that is, a computer with an IP address -- can access the file by invoking the proper communication protocol and specifying the URL. Typically, a URL has the format http://<host>/<path>, where "http" refers to the HyperText Transfer Protocol, "host" is the server's Internet identifier, and the "path" specifies the location of the file within the server. Each "Web site" can make available one or more Web "pages" or documents, which are formatted, tree-structured repositories of information, such as text, images, sounds and animations.

An important feature of the Web is the ability to connect one document to many other documents using "hypertext" links. Execution of a link causes retrieval of the linked document, which need not be located on the same server as the original document.

Accordingly, in the context of the present invention, applications 81 of job-control computer 64 include a Web "browser," which is used to access Web pages, and communication module 83 implements a dialer which, using router 87, accesses a service provider to establish an Internet connection over telephone lines. The Web browser utilizes URLs -- provided either by the operator or a link -- to locate, fetch and display the specified documents. "Display" in this sense can range from simple pictorial and textual rendering to command passing, real-time playing of audio and/or video segments or alarms, and storage-of data for subsequent display. The browser passes the URL to a protocol handler on the addressed server, which then retrieves the information and sends it to the browser for display; the browser causes the information to be cached (usually on a hard disk).

Web pages may written in HyperText Markup Language, or HTML, which breaks the document into syntactic portions (such as headings, paragraphs, lists, etc.) that specify layout and contents. An HTML file can contain elements such as text, graphics, tables and buttons, each identified by a "tag." Markup languages, however, produce static Web pages. The Java language is a machine-independent, interpreted computer language that facilitates dynamic display of information. Java-encoded "applets" are stand-alone programs embedded within Web pages that can interact with the operator locally, display moving animations and perform other functions on "Java-capable" browsers -- that is, browsers which include a Java interpreter. The applet is transferred to the browser along with other Web-page information and is executed by the Java interpreter; the data acted upon by the applet can be located on the same or a different Web page, or a different server entirely, since applets can themselves cause the browser to retrieve information via hypertext links.

Suppose, for example, that a browser is instructed to obtain a document having the URL http://host/file.html. The browser contacts the HTTP server running on "host," and requests the document file.html. The server finds this document and sends it according to the proper Internet protocol, along with a Multipurpose Internet Mail Extension or "MIME" identifier that specifies the document's type. When the querying computer receives the document, the browser examines the MIME to determine whether it is capable of autonomously displaying the document, or whether an external resource (e.g., a specialized viewer to display video segments) is necessary. In a simple case, the document might contain text and graphics specified in HTML, and specify an image residing in a different file on a different server or on the same server. The browser renders the document in accordance with the HTML instructions and requests the image, displaying it in the document as specified by the instructions when the image arrives. In more complex cases the document may contain, for example, Java instructions, which are passed to the browser's Java interpreter.

In accordance with the present invention, Web pages are stored on the computers accessed and controlled by the job-control computer (e.g., the image-control computers 62, the image servers 68, ink-control computer 70), which are themselves configured as shown in FIG. 3. In the controlled computers, however, applications 81 contain data structures defining one or more Web pages, enabling these computers to behave as servers; the data structures consist of ASCII data relevant to the function of the computer (e.g., status information), formatting instructions and associated data and, preferably, "applet" instructions that facilitate receipt of and response to control commands issued by job-control computer 64.

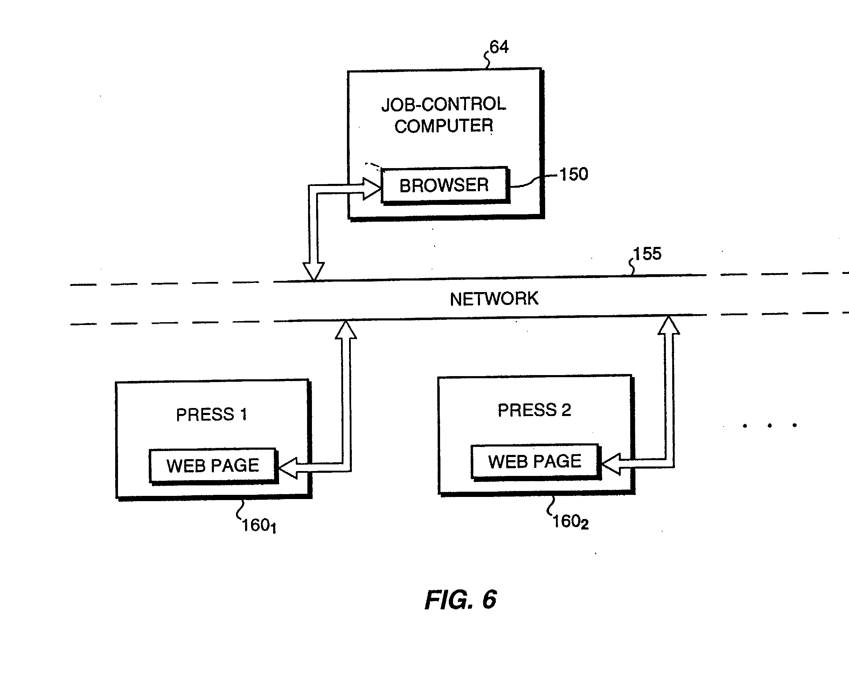

This is shown in FIG. 6 with respect to image-control computers. The job-control computer 64 includes a Web browser 150, which communicates (via communication module 83 and router 87, see FIG. 3) with a computer network 155 (usually, but not necessarily, the Internet) that supports http. A series of printing presses 160₁, 160₂, etc. are run by associated image-control computers having Web pages resident thereon. Such functionality is straightforwardly implemented by those skilled in the art (and familiar, for example, with the Java language) without undue experimentation. Management and transmission of Web pages to a querying computer 64 is handled by a conventional Web server module (implemented as an application 81, see FIG. 3) which allows the image-control computer to function as a network server. Once again, the features of this module are conventional in the art; see, e.g., Yuval Fisher, Spinning the web (Springer 1996).

For example, an applet stored on an image-control computer might cause display on job-control computer 64 of an operator interface showing the status and settings of the various imaging devices, inking mechanisms, and image-correction settings; menus and/or dialog boxes allowing the operator to change the settings and initiate printing; and interpretive code for translating and effecting operator-originated instructions. Similarly, ink-control computer 70 may contain a database of ink-regulation information that may be periodically updated by various ink manufacturers (via an Internet link to the Web page of computer 70), or by the operator (again, either via an Internet link to computer 70, or directly).

Press data may be processed before being copied into one of the Web pages resident on the particular image-control computer. Because of the linking capabilities of the Web, however, it is not necessary for all data to be stored in the Web page containing the display instructions; instead, the latter page may contain a "hyperlink" pointer to a different Web page in which data is accumulated. In addition, a Web page can obtain data from other Web pages (e.g., from different computers) by accessing those Web pages when appropriate. Thus, the press operator may obtain control over all computers 62 merely by accessing the Web page of one of those computers, so long as that Web page contains programming to obtain the appropriate data from and facilitate command passing to the other computers 62. As used herein, data is "associated with" a Web page or an applet if it is stored as part of the Web page or applet, or stored in a directly or indirectly hyperlinked Web page.

It will therefore be seen that the foregoing represents a highly extensible approach to distributed control of various printing operations and functions. The terms and expressions employed herein are used as terms of description and not of limitation, and there is no intention, in the use of such terms and expressions, of excluding any equivalents of the features shown and described or portions thereof, but it is recognized that various modifications are possible within the scope of the invention claimed.

## Claims

1. Distributed imaging apparatus comprising:
a. a job-control computer comprising a source of printing jobs and means for facilitating selection thereof;
b. a network interface for connecting the job-control computer to a computer network;
c. an imaging assembly for applying an image to a printing member in accordance with a digitally represented image pattern;
d. an image-control computer for directing the operation of the imaging assembly, the image-control computer causing the imaging assembly to execute a printing job by impressing the image pattern on at least one printing member; and
e. a network interface for connecting the image-control computer to-the network, thereby enabling data transfer, over the network, between the job-control and image-control computers.

2. The apparatus of claim 1 further comprising press means for inking the printing member and transferring ink to a substrate in accordance with the image.

3. The apparatus of claim 1 wherein the job-control computer comprises means for issuing instructions to the image-control computer over the network, the image-control computer being responsive to the instructions and causing the imaging assembly to execute a selected printing job in response thereto.

4. The apparatus of claim 3 further comprising:
a. a job server comprising means for storing a plurality of printing jobs; and
b. a network interface for connecting the job server to the network, thereby enabling data transfer, over the network, between the job-control computer and the job server.

5. The apparatus of claim 4 wherein the instructions comprise a identification of a storage location on the job server, the image-control computer further comprising means responsive to the instructions for fetching data representing the image pattern from the storage location.

6. The apparatus of claim 1 wherein the job-control computer comprises storage means for storing at least one printing job.

7. The apparatus of claim 1 further comprising:
a. at least a second imaging assembly for applying an image to a printing member in accordance with a digitally represented image pattern;
b. associated with the second imaging assembly,
1) an image-control computer for directing the operation of the second imaging assembly, the image-control computer causing the second imaging assembly to execute a second printing job by impressing a second image pattern on at least one printing member; and
2) a network interface for connecting the second image-control computer to the network, thereby enabling data transfer, over the network, between the jobcontrol computer and the second image-control computer,
the job-control computer comprising means for facilitating selection of one at least one of the imaging stations and causing execution thereon of a selected job.

8. The apparatus of claim 7 wherein the job-control computer comprises means for issuing instructions to a designated image-control computer over the network, the designated image-control computer being responsive to the instructions and causing a selected imaging assembly to execute a selected printing job in response thereto.

9. The apparatus of claim 2 further comprising:
a. an ink-control computer; and
b. a network interface for connecting the ink-control computer to the network, thereby enabling data transfer, over the network, between the job-control, image-control and ink-control computers, the image-control computer providing dot counts to the ink-control computer.

10. The apparatus of claim 9 further comprising:
a. a plurality of additional imaging assemblies each comprising an image-control computer for providing dot counts to the ink-control computer, a printing member and press means for inking the printing member and transferring ink to a substrate in accordance with the image; and
b. ink-regulating means responsive to ink-control signals at each of the imaging assemblies for regulating an amount of ink applied to the member associated with that imaging assembly, the ink-control computer comprising means for generating the ink-control signals in response to the dot counts.

11. The apparatus of claim 2 wherein the image-control computer provides dot counts to the job-control computer, the job-control computer being configured to generate ink-control signals in response to the dot counts, and further comprising ink-regulating means responsive to ink-control signals for regulating an amount of ink applied to the printing member.

12. The apparatus of claim 1 wherein the computer network is the Internet, the network interface comprising a browser for communicating over the Internet.

13. The apparatus of claim 1 wherein the imaging assembly comprises:
a. a writing head for placing a lithographic image on the printing member; and
b. control means responsive to electronic signals representing a source file for causing the writing head to image the printing member in accordance with the electronic signals, thereby placing thereon a lithographic image corresponding to the source file.

14. The apparatus of claim 13 wherein the writing head comprises at least one laser source.

15. The apparatus of claim 2 wherein the job-control computer comprises means for issuing instructions to the image-control computer over the network, the image-control computer being responsive to the instructions and causing the imaging assembly to execute a selected printing job in response thereto, the instructions directing press operations including imaging of a printing member, printing, and image correction.

16. A printing press capable of interacting with a remotely located computer, the press comprising computer storage means having stored instructions thereon, the instructions being retrievable and executable by the remotely located computer and effecting at least one of (i) presentation, on the remotely located computer, of data relevant to a press function and (ii) execution of commands originating with the remotely located computer and directing operation of the press.

17. The printing press of claim 16 further comprising a communication module for facilitating data interchange between the press and the remotely located computer.

18. The printing press of claim 16 wherein the printing press comprises (i) means for impressing an image pattern on at least one printing member, and (ii) means for transferring ink to a substrate in accordance with the image pattern, the press functions including imaging a printing member in accordance with a selected printing job.

19. The printing press of claim 18 wherein the press further comprises:
a. a plurality of print stations, each station including a plate cylinder for supporting a printing member;
b. a writing head for placing a lithographic image on the printing member; and
c. control means responsive to electronic signals representing a source file for causing the writing head to image the printing member in accordance with the electronic signals, thereby placing thereon a lithographic image corresponding to the source file,
the functions further including correction of the source file.

20. The printing press of claim 16 wherein the printing press comprises (i) means for impressing an image pattern on at least one printing member, and (ii) means for transferring ink to a substrate in accordance with the image pattern, the press functions including printing a selected printing job.

21. A ink-control computer for use with a remotely located printing press, the ink-control computer comprising computer storage means having stored thereon a database of ink-regulation parameters, the parameters being retrievable by the remotely located printing press to determine ink settings thereon.

22. The ink-control computer of claim 21 wherein the printing press comprises ink-regulating means responsive to ink-control signals at each of a plurality of print stations thereon for regulating an amount of ink applied at that station.

23. The ink-control computer of claim 21 further comprising communication means for facilitating remote alteration of the database.
